Europäisches Patentamt

European Patent Office

Office européen des brevets

(11) Publication number: **0 221 782 B1**

## (12) EUROPEAN PATENT SPECIFICATION

(45) Date of publication of patent specification: **01.04.92**   (51) Int. Cl.⁵: **G11B 7/08**, G11B 7/09

(21) Application number: **86308509.8**

(22) Date of filing: **30.10.86**

(54) Optical information recording and reproducing apparatus.

(30) Priority: **30.10.85 JP 245096/85**
**31.10.85 JP 246497/85**

(43) Date of publication of application:
**13.05.87 Bulletin 87/20**

(45) Publication of the grant of the patent:
**01.04.92 Bulletin 92/14**

(84) Designated Contracting States:
**DE FR GB IT**

(56) References cited:
**EP-A- 0 189 932**
**FR-A- 2 544 535**

**PATENT ABSTRACTS OF JAPAN, vol. 9, no. 195 (P-379)[1918], 13th August 1985; & JP-A-60 61 925 (RICOH K.K.) 09-04-1985**

**PATENT ABSTRACTS OF JAPAN, vol. 9, no. 182 (P-376)[1905], 27th July 1985; & JP-A-60 52 935 (TOSHIBA K.K.) 26-03-1985**

(73) Proprietor: **SHARP KABUSHIKI KAISHA**
**22-22 Nagaike-cho Abeno-ku**
**Osaka 545(JP)**

(72) Inventor: **Nomura, Masaru**
**Akebono-ryo, 2613-1, Ichinomoto-cho**
**Tenri-shi Nara-ken(JP)**
Inventor: **Deguchi, Toshihisa Daiya-Heights**
**Gakuenmae C-722**
**2-200-5, Gakuenmaeyamato-cho**
**Nara-shi Nara-ken(JP)**
Inventor: **Terashima, Shigeo**
**95-86, Uenosyou-cho Nikaido**
**Tenri-shi Nara-ken(JP)**

(74) Representative: **Brown, Kenneth Richard et al**
**R.G.C. Jenkins & Co. 26 Caxton Street**
**London SW1H 0RJ(GB)**

## Description

This invention relates to an optical information recording and reproducing apparatus.

Conventionally, in types of optical information recording and reproducing apparatus for use with optical disks in which tracks are formed spirally or concentrically, methods of recording and reproducing information in the tracks by focusing a light beam from a light source such as a laser on to the track or tracks by means of an optical pickup are known. In such types of recording and reproducing apparatus, focusing and tracking controls are respectively provided to focus the light beam spot correctly on a desired track, and to match the tracking position of the light beam with the track.

If, however, the surface of the optical disk is inclined or warped, or if the optical system of optical pickup is not adjusted correctly, an offset is caused in the tracking control signal, and satisfactory tracking control is not achieved.

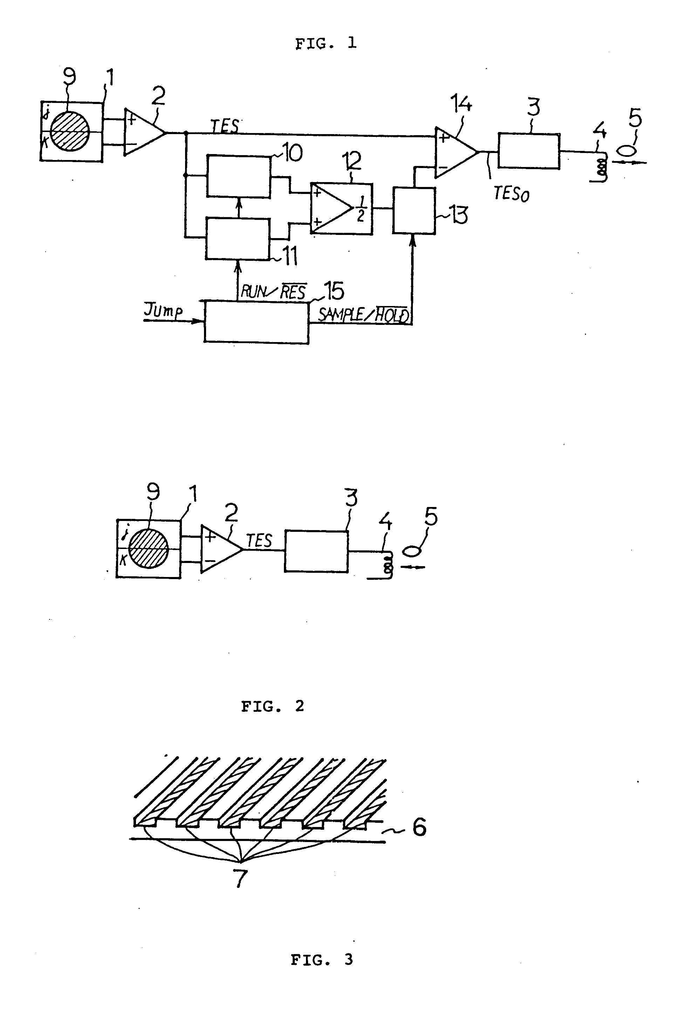

This problem is described in detail below with reference to Fig. 2 through Fig. 7.

Fig. 2 is a simplified block diagram of a tracking servo system for tracking control. A photo detector for tracking control 1 detects deviation of light beam in the tracking direction. In this example, the detector is shown divided into two parts. A subtractor 2 determines the difference between the outputs of the photo detector 1. An actuator driving circuit 3 comprises a phase compensation circuit and others, and drives an actuator 4. The actuator 4 shifts an objective lens 5 in the tracking direction. The output of the subtractor 2 is called a tracking control signal TES. In an optical disk, tracks 7 as shown in Fig. 3 are formed spirally or concentrically. The tracks 7, are used to record information on the optical disk 6.

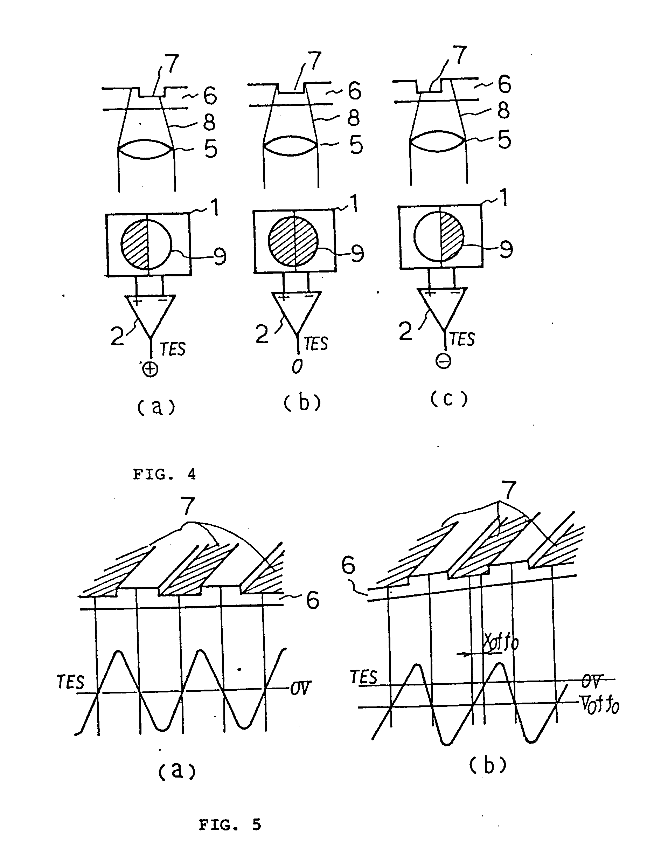

Fig. 4 is a schematic representation of changes in the quantity of light falling on the two halves of the photo detector as a result of the position of the light beam relative to the track.

A light beam 8 is focused on the track 7 of optical disk 6 by means of the objective lens 5, and it is reflected and diffracted to return to the photo detector 1 for tracking control, represented by the light area 9. The hatching of the light area 9 shows schematically which part of the detector receives the larger quantity of light.

Depending on the tracking position of light beam 8 and the position of the track 7, the quantity of light received by each of the parts of the photo detector 1 varies, and the output of the subtractor 2 (the tracking control signal TES) varies positively or negatively.

The quantity of light received by each of the two parts of the photo detector for tracking control 1 changes as shown in (a), (b), (c) of Fig. 4, depending on the relative positions of the light beam tracking position and track. When the difference between the quantity of light falling on each of the elements of the photo detector 1, in this case two, is obtained from the subtractor 2, a tracking control signal TES which varies positively or negatively depending on the relative positions of the light beam and track can be generated.

A positive change is shown in Fig. 4(a), and a negative change is demonstrated in (c), while (b) denotes a case of exact tracking of the light beam along the track. In this case the tracking control signal TES is zero.

Usually, when the light beam is incident normally on the disc, the tracking control system controls the light beam tracking position and the TES is zero near the middle of the track, so the light beam is correctly positioned on the track.

When a light beam is incident normally on the disk surface without inclination, a tracking control signal TES of an approximately sinusoidal waveform shown in Figure 5(a) is obtained in accordance with the relative position of the track 7 and the light beam 8. A tracking control signal of zero volts corresponds to the light beam being incident on the centre of a track. The tracking servo system controls the light beam position so that the tracking control signal TES is zero near the centre of a track so that the light beam is always focused in the middle of a track. If, however, the light beam is not incident vertically on the disk surface due to inclination or warp of the disk, the tracking control signal is not 0 V when the laser beam is incident on the centre of the track, as shown in Fig. 5(b), and an offset of $Voff_0$ occurs as a result. Accordingly, the light beam is focused at a position away from the centre of the track by a distance $Xoff_0$.

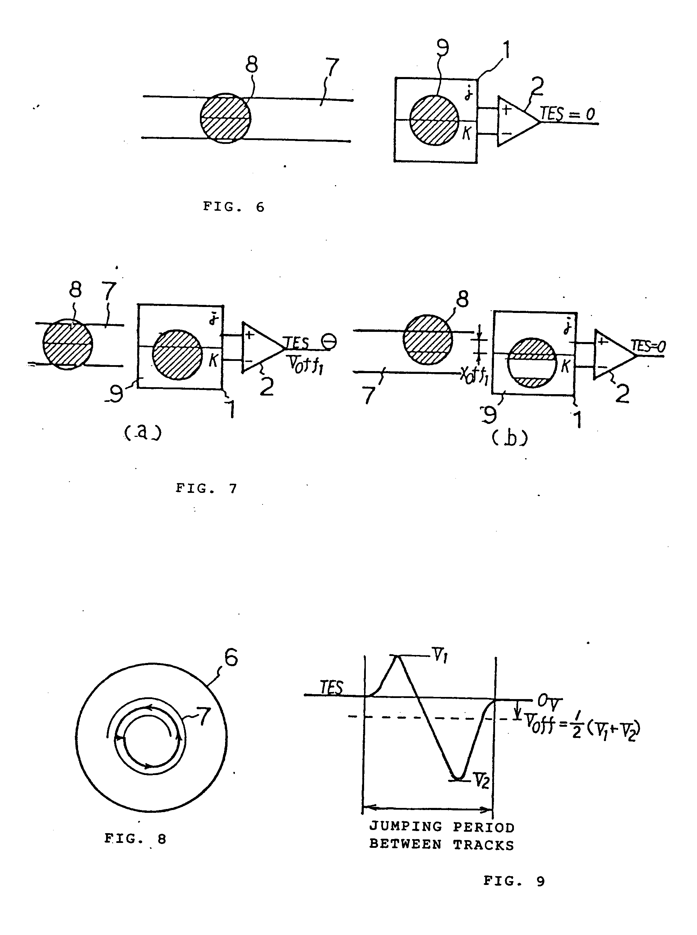

If the optical system of a photo pickup is not correctly adjusted, similar problems occur. Fig. 6 shows a properly adjusted optical system, in which the centre of the light beam 8 coincides with the centre of the track 7. The quantity of light received is equally divided between the elements j and k of the photodetector 1, so that the tracking control signal TES, or the output of the subtractor 2, is zero. As stated above, since the servo system controls the light beam position so that this tracking control signal TES is zero, the light beam is correctly positioned in the centre of the track in this case. When the optical system is not correctly adjusted as shown in Fig. 7(a), and the light beam is correctly converged on the middle of the track, an offset of $Voff_1$ occurs in the tracking control signal TES. The servo system then operates so that the tracking control signal TES is zero, and the center of the light beam is focused on a position away from the centre of the track by a distance

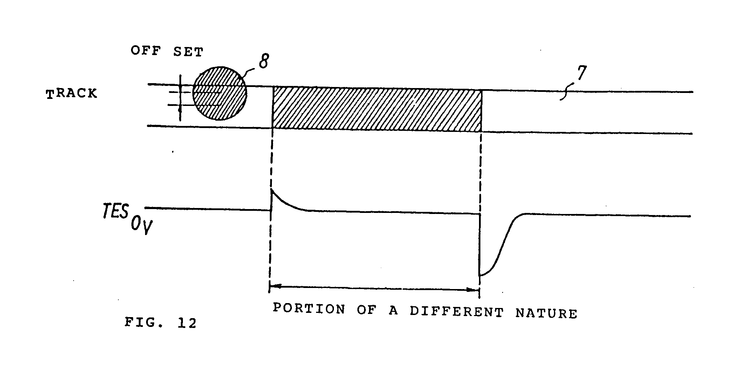

$Xoff_1$. When the centre of the light beam is focused at a point away from the centre of the track, information cannot be recorded or reproduced correctly. If, moreover, the track is different optically or physically at one or more positions (for example, in a disk having sector number or other information formed in a shape different from others, in part of the track on which the track number is formed as pits), an abnormal spike appears in the tracking control signal TES when the light beam falls on the boundary of these two parts, or when the light beam moves away from such a boundary. This is due to the difference in optical or physical properties of the two parts. This results in unstable tracking control or other inconveniences (see Fig. 12).

JP-60-61925 describes a tracking controller that includes an offset detecting circuit which provides a DC offset voltage that is applied to a latch circuit. The output of the latch circuit is then converted to an analogue signal and subtracted from the tracking control signal, to correct the tracking signal.

It is an aim of this invention to alleviate some of the aforementioned problems.

To achieve the above objects, according to an embodiment of the present invention, there is provided an apparatus for recording and/or reproducing information into and/or from spiral or concentric tracks on a recording medium using a recording/reproducing light beam focussed onto a said track;

the apparatus including a tracking control system for keeping the recording/reproducing beam properly positioned laterally on said track, and means for selectively driving said beam to jump between tracks;

said tracking control system comprising means for generating a tracking control signal for use in correcting deviation of the beam from its proper position on said track, and an error correction circuit which has means for detecting an offset voltage included in the tracking control signal, and which uses said offset voltage for compensating for error in said tracking control signal;

characterized in that the tracking control system further comprises means for generating timing control signals for use in selectively and systematically operating said error correction circuit, in response to a correction control signal indicating when said beam is selectively driven to jump between said tracks;

the voltage detecting means being operable to detect the voltages of the positive and negative peaks appearing in the tracking control signal in the period of jumping between said tracks, and to provide an output voltage being one half of the algebraic sum of said peak voltages as said offset voltage.

To achieve the above objects, according to another embodiment of the present invention there is provided an apparatus, for recording and/or reproducing information into and/or from spiral or concentric tracks on a recording medium using a recording/reproducing light beam focussed onto a said track, said information being recorded into and/or reproduced from track portions having different physical or optical properties;

the apparatus including a tracking control system for keeping the recording/reproducing beam properly positioned laterally on said track;

said tracking control system comprising means for generating a tracking control signal for use in correcting deviation of the beam from its proper position on said track;

characterised in that the apparatus further includes means for detecting said beam crossing a boundary between different said track portions; and in that the tracking control system further comprises an error correction circuit having means for detecting a spike shaped voltage included in the tracking control signal, for compensating for error in said tracking control signal, and means for generating timing control signals for use in selectively and systematically operating said error correction circuit, in response to a correction control signal indicating when said beam crosses said boundary;

the voltage detecting means being operable to detect the peak value of said spike shaped voltage in the tracking control signal in the period of crossing said boundary, and said error correction circuit being arranged to use said peak value for effecting said error compensation.

The present invention will be more fully understood from the detailed description given hereinbelow and the accompanying drawings which are given by way of illustration, and thus are not limitative of the present invention and wherein:

Fig. 1 is a circuit block diagram of a first embodiment of an optical information recording and reproducing apparatus according to the present invention;

Fig. 2 is a schematic block diagram of a conventional tracking servo system;

Fig. 3 is a perspective view of a conventional optical disk;

Figs. 4(a) to (c) are schematic representations of a tracking control device for explaining the operating principles of tracking control;

Figs. 5(a) and (b) are schematic representations of the control signals generated by flat and inclined disks;

Fig. 6 and Fig. 7 are schematic representations of a tracking controller for offsets in adjustment of the optical system giving rise to a tracking control failure;

Fig. 8 shows the route of a light beam on a disk having spiral tracks.

Fig. 9 is a signal waveform diagram to show the waveform of a tracking control signal TES when jumping tracks;

Fig. 10 shows the route of a light beam on a desired track in a disk having concentric tracks;

Fig. 11 is a timing waveform diagram;

Fig. 12 is an explanatory waveform diagram of tracking control signal in an abnormal state;

Fig. 13(a) is a circuit block diagram of a second embodiment of an optical information recording and reproducing apparatus according to the present invention;

Fig. 13(b) is a timing waveform diagram;

Fig. 14(a) is a circuit block diagram of a third embodiment of an optical information recording and reproducing apparatus according to the present invention; and

Fig. 14(b) is a timing waveform diagram.

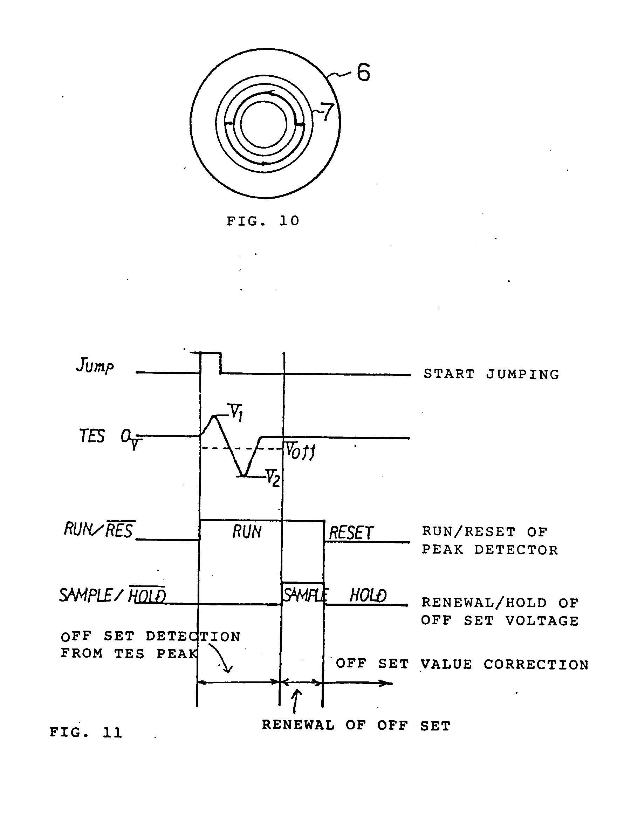

A first embodiment of an optical information recording and reproducing apparatus of this invention is described below. For disks having spiral or concentric tracks, the offset voltage of the tracking control signal is determined from the tracking control signal TES generated as the light beam moves between adjacent track portions in a radial direction. By removing the offset voltage from the tracking control signal, the light beam can be converged on the centre of the track. The optical information recording and reproducing apparatus of this embodiment of the present invention operates on the following principle; that is, when recording or reproducing the information in a disk having spiral or concentric tracks, for example, tracks may be jumped for 'still' operation (stopping at the same track) for accessing a desired track (see Fig. 8). During a jump the track control signal TES is as shown in Fig. 9. One half of the algebraic sum of the positive peak voltage $V_1$ and negative peak voltage $V_2$ will give the offset voltage Voff of TES.

The first embodiment of the optical information recording and reproducing apparatus of this invention according to this principle of operation is shown in Fig. 1. By finding the difference between the outputs of elements j and k of a photo detector for tracking control 1 by means of a subtractor 2, a tracking control signal TES is generated. Peak voltage detecting circuits 10 and 11 respectively detect the positive and negative peak voltages of the tracking control signal TES. An adder 12 determines half the algebraic sum of the positive and negative peak voltages to determine the offset voltage Voff of said tracking control signal TES. A holding circuit 13 holds the offset voltage Voff. A subtractor 14 subtracts the held offset voltage from the original tracking control signal TES, and generates, as a result, the output $TES_0$. A timing generating circuit 15 generates a timing control signal, on jumping tracks (i.e. when a jump signal is generated) for the peak voltage detecting circuits 10, 11, and the offset voltage holding circuit 13. The waveforms of various parts of the signal are shown in Fig. 11. The actuator 4 is driven in accordance with the output $TES_0$ of the subtractor 14, through a driving circuit 3. When the objective lens 5 is shifted, the light beam is corrected to focus accurately in the middle of a track, so that the above-discussed disadvantages of the prior art do not occur. The offset voltage holding circuit 13 updates the offset voltage being held when the laser beam jumps between tracks.

According to this embodiment of the present invention, since the offset of the track for recording or reproducing information is corrected each time the beam jumps between tracks, the light beam can be accurately focused on the track regardless of differences in the warp or inclination of the disk at different radial positions, or deviations from correct adjustment of the optical system that occur with time. In a disk with information recorded and reproduced in concentrical tracks, as shown in Fig. 10, jumping occurs each time the beam moves to a different track. The offset correction may then be updated once each revolution. The above stated advantages are thereby realised. Of course, it may not be necessary to update the offset correction at every track jump, and update may, therefore only be effected when necessary.

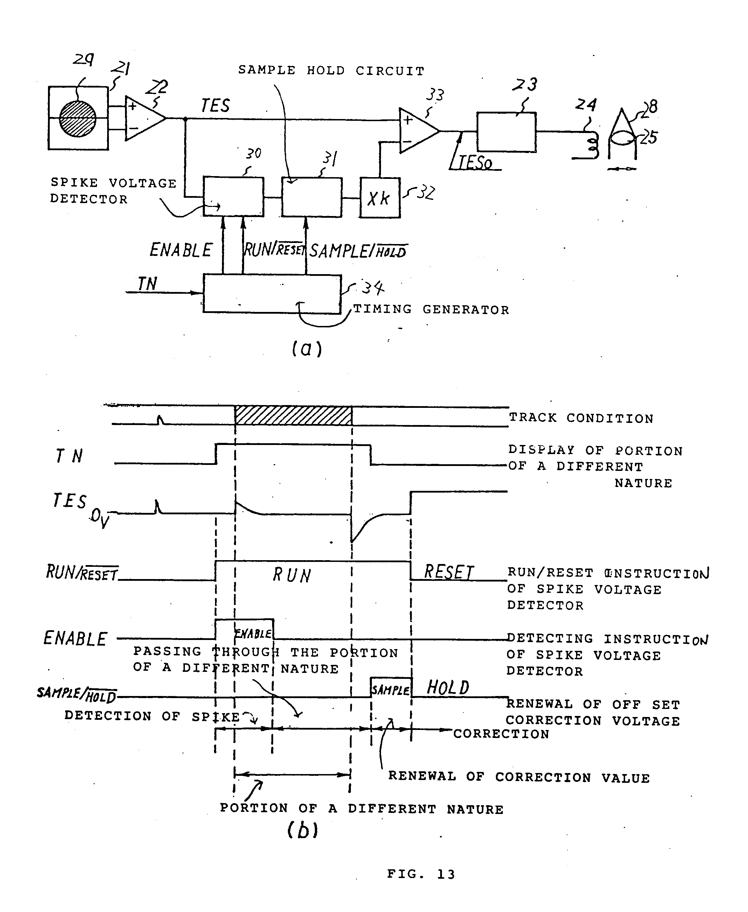

A second embodiment of an optical information recording and reproducing apparatus of this invention is described hereinafter with reference to Figure 13. In the first embodiment, the convergence of the light beam on the centre of the track is controlled by eliminating the offset voltage occurring in the tracking control signal by determining the offset during movement of the light beam radially across the disk. In the second embodiment, on the other hand, the offset voltage is detected as the scanning optical beam moves across the interface between first and second track portions having dissimilar physical or optical properties. A spike-shaped voltage occurs in the tracking control signal at this interface from which the offset voltage can be determined. Since this spike-shaped voltage varies depending on the magnitude of the offset voltage, the tracking control signal can be controlled by detecting the spike-shaped voltage. This information can then be used to ensure that the light beam is accurately converged on the centre of the track. This second embodiment is based on the concept outlined below.

The above-discussed conventional problems with the generation of a voltage spike at the interface between parts of a track having different optical or physical properties occur because the light beam is focused on a point located away from the centre of the track. They do not occur when the beam is focused correctly on the centre of the track. Furthermore, when the light beam crosses the boundary between different parts of the track (such as at a portion with the track number etched on the track) the value of the spike-shaped voltage depends on the deviation of the light beam from the central position occurring in the tracking control signal TES. By detecting this spike-shaped voltage, determining an offset voltage and subtracting this from the tracking control signal TES, the light beam focusing deviation can be corrected.

That is, in the circuit block diagram in Fig. 13-(a), the difference in the quantity of light received 29 by the two elements which make up a photo detector 21 is determined by a subtractor 22. This becomes a tracking control signal TES. A spike-shaped voltage detector 30 detects the spike-shaped voltage on this tracking control signal TES. A sample hold circuit 31 holds the output of the detector 30. A timing signal generating circuit 34 generates control signals for the spike-shaped voltage detector 30 and the sample hold circuit 31, in accordance with a control signal TN produced by a means (not shown), to detect when the light beam enters or leaves a part of the track having different optical or physical properties. The offset voltage for correction of the tracking control system (TES) is updated whenever this control signal TN is generated. A coefficient multiplier 32 multiplies the output of the sample hold circuit by a coefficient to provide the offset voltage. Numeral 33 denotes a subtractor in this embodiment, which generates a corrected tracking control signal $TES_0$ generated by subtracting the output of the coefficient multiplier 32 from the tracking control signal TES. The tracking control signal $TES_0$ drives the actuator 24 through an actuator driving circuit 23 comprising phase compensating and other circuits, to shift the objective lens 25 to control the focusing position of light beam 28.

This embodiment is suitable for use when the relative positions of parts of the track having different optical or physical properties (e.g. the track number or the like in this explanation) formed by etching the disk can be estimated easily. The operation timing of this embodiment is as shown in Fig. 13(b). By limiting operation of the spike voltage detector 30 and sample hold circuit 31 in accordance with the control signal from the timing generating circuit 34 to areas of the track having different optical or physical properties, the detection of spike voltages caused by flaws such as those that can be seen at the left side of the different part in (b) of the same figure on the track can be avoided.

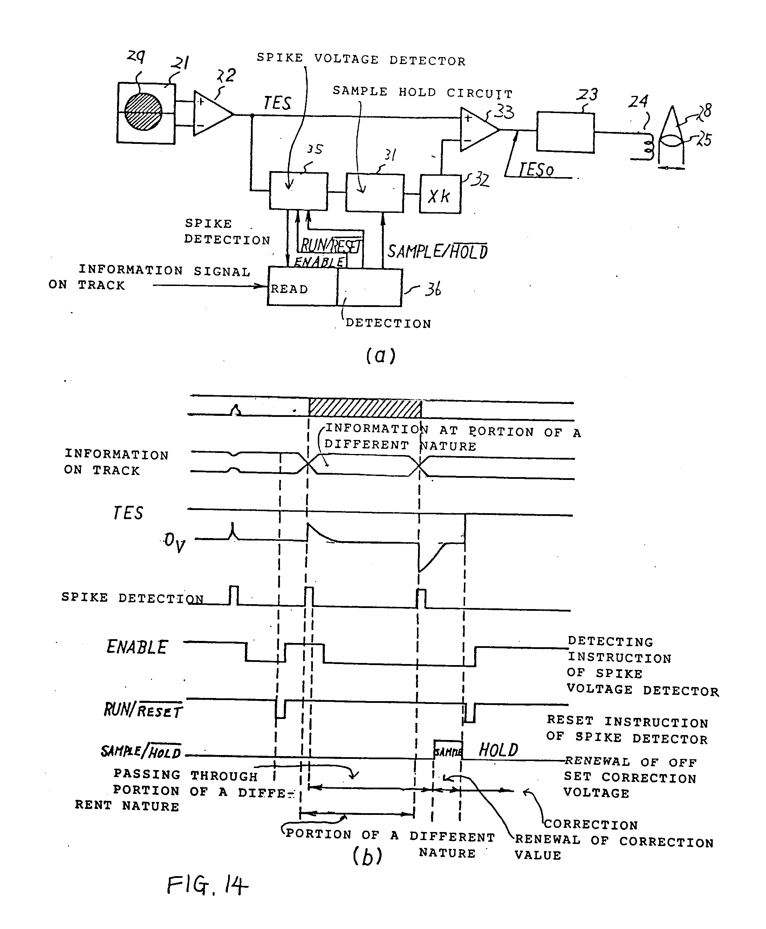

The third embodiment of this invention is shown in Fig. 14.

The circuit block diagram shown in Fig. 14(a), is approximately the same as the embodiment of Fig. 13, except that the spike voltage detector 35 is different from the spike voltage detector 30 of Fig. 13. The spike voltage detector 35 detects the peak value when a spike voltage occurs in the tracking control signal TES. It also provides a control output signal to the timing generating circuit 36 for indicating the occurrence of spikes in the tracking control signal TES. The timing generating circuit 36 is also different from the timing generating circuit 34 of the second embodiment as it reads the information signal from the track after receiving the control output signal. The timing generating circuit 34 sends an instruction to the sample hold circuit 31 when the voltage spike is judged to be due to information from dissimilar parts of the track, and updates the offset voltage for correction accordingly. This embodiment is suitable for use with disks for which it is difficult to estimate the position of the dissimilar parts of the track, such as track numbers in constant linear velocity (CLV) disks or recorded areas of addition write-in type disk. In this embodiment, the timing is as shown in Fig. 14(b).

In the above embodiments, spike voltages occur when the light beam enters and leaves parts of the track having different optical or physical properties. Either entry, or exit, or both entry and exit, may be detected, but it is advantageous to detect the former because this expresses the quantity of positional deviation between the light beam focusing position and the centre of track accurately. In the embodiment in Fig. 14, in particular, when the latter is detected, it is necessary to read the information on the track at all times, and to determine the spike voltage generated, after it has been determined that the spike is due to the boundary between dissimilar parts of the track being crossed. This makes the structure of the tracking control system rather more complicated.

In the second and third embodiments of this invention, since the offset is corrected on a desired track, optimum tracking control for individual tracks can be effected. If parts having dissimilar optical or physical properties are present on the track, the effect of errors in the tracking control system in that area can be eliminated.

**Claims**

1. Apparatus for recording and/or reproducing information into and/or from spiral or concentric tracks (7) on a recording medium (6) using a recording/reproducing light beam (8) focussed onto a said track (7);

    the apparatus including a tracking control system for keeping the recording/reproducing beam (8) properly positioned laterally on said track (7), and means for selectively driving said beam (8) to jump between tracks (7);

said tracking control system comprising means (1, 2) for generating a tracking control signal (TES) for use in correcting deviation of the beam from its proper position on said track, and an error correction circuit (10, 11, 12, 13, 14) which has means (10, 11, 12) for detecting an offset voltage (Voff) included in the tracking control signal, and which uses said offset voltage (Voff) for compensating for error in said tracking control signal (TES);

characterized in that the tracking control system further comprises means (15) for generating timing control signals (RUN/RES,SAMPLE/HOLD) for use in selectively and systematically operating said error correction circuit (10, 11, 12, 13, 14), in response to a correction control signal (JUMP) indicating when said beam (8) is selectively driven to jump between said tracks (7);

the voltage detecting means (10, 11, 12) being operable to detect the voltages of the positive (V1) and negative (V2) peaks appearing in the tracking control signal (TES) in the period of jumping between said tracks, and to provide an output voltage being one half of the algebraic sum of said peak voltages ($\frac{1}{2}$ {V1 + V2}) as said offset voltage (Voff).

2. Apparatus according to claim 1, wherein said error correction circuit further has

means (13) for holding said offset voltage, and

means (14) for compensating said tracking control signal using said offset voltage.

3. Apparatus according to claim 2, wherein said detecting means (10, 11, 12) and holding means (13) are arranged to receive respective said timing control signals (RUN/RES, SAMPLE/HOLD) for use in their operations.

4. Apparatus according to claim 2, wherein said compensating means (14) is a subtracting means for subtracting said offset voltage (Voff) from said tracking control signal (TES).

5. Apparatus according to claim 1, 2, 3 or 4, wherein said driving means is arranged to provide said correction control signal (JUMP) to said timing control signals generating means (15).

6. Apparatus according to claim 2, 3, 4, or claim 5 when dependent upon claim 2, 3 or 4 wherein the holding means (13) is arranged to sample and hold said offset voltage (Voff) and the compensating means (14) is arranged to subtract said held offset voltage from the tracking control signal (TES) during the recording and/or reproducing of information.

7. Apparatus for recording and/or reproducing information into and/or from spiral or concentric tracks (7) on a recording medium (6) using a recording/reproducing light beam (8) focussed onto a said track (7), said information being recorded into and/or reproduced from track portions having different physical or optical properties;

the apparatus including a tracking control system for keeping the recording/reproducing beam (8) properly positioned laterally on said track (7);

said tracking control system comprising means (21, 22) for generating a tracking control signal (TES) for use in correcting deviation of the beam from its proper position on said track;

characterised in that the apparatus further includes means for detecting said beam crossing a boundary between different said track portions; and in that

the tracking control system further comprises an error correction circuit (30, 31, 32, 33) having means (30) for detecting a spike shaped voltage included in the tracking control signal (TES), for compensating for error in said tracking control signal (TES), and means (34) for generating timing control signals (ENABLE,RUN/RESET,SAMPLE/HOLD) for use in selectively and systematically operating said error correction circuit (30, 31, 32, 33), in response to a correction control signal (TN) indicating when said beam crosses said boundary;

the voltage detecting means (30) being operable to detect the peak value of said spike shaped voltage in the tracking control signal (TES) in the period of crossing said boundary, and said error correction circuit being arranged to use said peak value for effecting said error compensation.

8. Apparatus according to claim 7, wherein said error correction circuit further has

means (31) for holding said spike shaped voltage peak value, and

means (32, 33) for compensating said tracking control signal using said spike shaped voltage peak value.

9. Apparatus according to claim 8, wherein said voltage detecting means (30) and holding means (31) are arranged to receive respective said timing control signals (ENABLE, RUN/RESET, SAMPLE/HOLD) for use in their operations.

10. Apparatus according to claim 8, wherein said compensating means includes an arithmetic means (32) and a subtracting means (33).

11. Apparatus according to claim 7, 8, 9 or 10, wherein said boundary crossing detecting means is arranged to provide said correction control signal (TN) to said timing control signals generating means (34).

12. Apparatus according to claim 7, 8, 9 or 10, wherein said boundary crossing detecting means (35) is also said voltage detecting means and said boundary crossing detecting means (35) is arranged to detect the peak value of any spike shaped voltage in the tracking control signal (TES) and to provide said correction control signal (SPIKE DETECTION) to said timing control signals generating means (36), whereby said timing control signals generating means (36) is arranged to read the information on the track (7) and if said information is on a said different track portion, to generate said timing control signals (ENABLE, RUN/RESET, SAMPLE/HOLD) indicating when said beam (8) crosses said boundary.

13. Apparatus according to claim 10, or claim 11 or 12 when dependent from claim 10, wherein the holding means (31) is arranged to sample and hold the spike shaped voltage peak value, the arithmetic means (32) is arranged to multiply said held peak value with a deviation coefficient (K), and the subtracting means (33) is arranged to subtract said multiplied peak value from the tracking control signal during the recording and/or reproducing of information.

14. Apparatus according to claim 13 when dependent upon claim 11, wherein said boundary crossing detecting means includes means for determining or estimating the relative locations of said different track portions on the track.

**Revendications**

1. Appareil destiné à enregistrer et/ou à reproduire des informations dans des pistes (7) en spirale ou concentriques sur un moyen d'enregistrement (6), et/ou à partir de celles-ci, en utilisant un faisceau lumineux d'enregistrement/reproduction (8) focalisé sur une dite piste (7);

l'appareil comprenant un système de commande de poursuite pour maintenir bien positionné latéralement sur ladite piste (7) le faisceau d'enregistrement/reproduction (8), et un moyen pour entraîner sélectivement ledit faisceau (8) pour sauter entre des pistes (7);

ledit système de commande de poursuite comprenant un moyen (1, 2) pour engendrer un signal de commande de poursuite (TES) à utiliser pour corriger l'écart du faisceau par rapport à sa position correcte sur ladite piste, et un circuit de correction d'erreurs (10, 11, 12, 13, 14) qui comporte un moyen (10, 11, 12) pour détecter une tension de décalage (Voff) comprise dans le signal de commande de poursuite, et qui utilise ladite tension de décalage (Voff) pour compenser l'erreur dans ledit signal de commande de poursuite (TES);

caractérisé en ce que le système de commande de poursuite comprend en outre un moyen (15) pour engendrer des signaux de commande de synchronisation (RUN/RES, SAMPLE/HOLD) à utiliser pour mettre en oeuvre sélectivement et systématiquement ledit circuit de correction d'erreur (10, 11, 12, 13, 14) en réponse à un signal de commande de correction (JUMP) indiquant quand ledit faisceau (8) est entraîné sélectivement pour sauter entre lesdites pistes (7);

le moyen de détection de tension (10, 11, 12) pouvant fonctionner pour détecter les tensions des pics positif (V1) et négatif (V2) apparaissant dans le signal de commande de poursuite (TES) dans la période de saut entre lesdites pistes et pour fournir une tension de sortie égale à la moitié de la somme algébrique desdites tensions de pics (1/2 {V1 + V2}) en tant que dite tension de décalage (Voff).

2. Appareil selon la revendication 1 dans lequel ledit circuit de correction d'erreurs comprend en outre

un moyen (13) pour retenir ladite tension de décalage, et

un moyen (14) pour compenser ledit signal de commande de poursuite en utilisant ladite tension de décalage.

3. Appareil selon la revendication 2, dans lequel ledit moyen de détection (10, 11, 12) et ledit moyen de retenue sont agencés pour recevoir lesdits signaux de commande de synchronisation (RUN/RES, SAMPLE/HOLD) à utiliser dans leurs opérations.

4. Appareil selon la revendication 2, dans lequel ledit moyen de compensation est un moyen de soustraction destiné à soustraire dudit signal de commande de poursuite (TES) ladite tension de décalage (Voff).

5. Appareil selon la revendication 1, 2, 3 ou 4, dans lequel ledit moyen d'entraînement est agencé pour fournir ledit signal de commande de correction (JUMP) audit moyen (15) de génération de signaux de commande de synchronisation.

6. Appareil selon la revendication 2, 3, 4, ou selon la revendication 5 lorsqu'elle dépend de la revendication 2, 3 ou 4, dans lequel le moyen de retenue (13) est agencé pour explorer et retenir ladite tension de décalage (Voff) et ledit moyen de compensation (14) est agencé pour soustraire dudit signal de commande de poursuite (TES) ladite tension de décalage retenue pendant l'enregistrement et/ou la reproduction d'informations.

7. Appareil destiné à enregistrer et/ou à reproduire des informations dans des pistes (7) en spirale ou concentriques sur un milieu d'enregistrement (6), et/ou à partir de celles-ci, en utilisant un faisceau lumineux d'enregistrement/reproduction (8) focalisé sur une dite piste (7), ladite information étant enregistrée dans des parties de pistes comportant des propriétés physiques ou optiques différentes, et/ou étant reproduite à partir de celles-ci;
   l'appareil comprenant un système de commande de poursuite pour maintenir bien positionné latéralement sur ladite piste ledit faisceau (8) d'enregistrement/reproduction;
   ledit système de commande de poursuite comprenant un moyen (21, 22) pour engendrer un signal de commande de poursuite (TES) à utiliser pour corriger un écart du faisceau par rapport à sa position correcte sur ladite piste;
   caractérisé en ce que l'appareil comprend en outre un moyen de détection du croisement, par ledit faisceau, d'une limite entre desdites parties de piste différentes; et en ce que
   le système de commande de poursuite comprend en outre un circuit de correction d'erreurs (30, 31, 32, 33) comportant un moyen (30) pour détecter une tension en forme de pointe incluse dans le signal de commande de poursuite (TES), pour compenser l'erreur dudit signal de commande de poursuite (TES) et un moyen (34) pour engendrer des signaux de commande de synchronisation (ENABLE, RUN/RESET, SAMPLE/HOLD) à utiliser pour mettre en oeuvre sélectivement et systématiquement ledit circuit de correction d'erreurs (30, 31, 32, 33) en réponse à un signal de commande de correction (TN) indiquant quand ledit faisceau croise ladite limite;
   ledit moyen (30) de détection de tension pouvant fonctionner pour détecter la valeur de pics de ladite tension en forme de pointe dans le signal de commande de poursuite (TES) dans la période de croisement de ladite limite, et ledit circuit de correction d'erreurs étant agencé pour utiliser ladite valeur de pics pour effectuer ladite compensation d'erreurs.

8. Appareil selon la revendication 7, dans lequel ledit circuit de correction d'erreur comprend en outre
   un moyen (31) pour retenir ladite valeur de pics de la tension en forme de pointe, et
   un moyen (32, 33) pour compenser ledit signal de commande de poursuite en utilisant ladite valeur de pics de la tension en forme de pointe.

9. Appareil selon la revendication 8 dans lequel ledit moyen (30) de détection de tension et ledit moyen de retenue (31) sont agencés pour recevoir lesdits signaux respectifs de commande de synchronisation (ENABLE, RUN/RESET, SAMPLE/HOLD) à utiliser dans leurs opérations.

10. Appareil selon la revendication 8, dans lequel ledit moyen de compensation comprend un moyen arithmétique (32) et un moyen de soustraction (33)

11. Appareil selon la revendication 7, 8, 9 ou 10 dans lequel ledit moyen de détection de croisement de limite est agencé pour fournir ledit signal de commande de correction (TN) audit moyen (34) de génération de signaux de commande de synchronisation.

12. Appareil selon la revendication 7, 8, 9 ou 10 dans lequel ledit moyen (35) de détection de croisement de limite est également ledit moyen de détection de tension et ledit moyen (35) de détection de croisement de limite est agencé pour détecter la valeur de pics d'une tension quelconque en forme de pointe dans le signal de commande de poursuite (TES) et pour envoyer ledit signal de commande de correction (SPIKE DETECTION) audit moyen (36) de génération de signaux de commande de synchronisation, grâce à quoi ledit moyen (36) de génération de signaux de commande de synchronisation est agencé pour lire l'information sur la piste (7) et, si ladite information est sur une partie de piste différente, pour engendrer lesdits signaux de commande de synchronisation (ENABLE, RUN/RESET, SAMPLE/HOLD) indiquant quand ledit faisceau (8) croise ladite limite.

13. Appareil selon la revendication 10, ou la revendication 11 ou 12 lorsqu'elles dépendent de la revendication 10, dans lequel le moyen de retenue (31) est agencé pour échantillonner et retenir la valeur de pics de tension en forme de pointe, le moyen arithmétique (32) est agencé pour multiplier ladite valeur de pics retenue par un coefficient d'écart (K) et le moyen de soustraction (33) est agencé pour soustraire dudit signal de commande de poursuite ladite valeur de pics multipliée pendant l'enregistrement et/ou la reproduction d'informations.

14. Appareil selon la revendication 13 lorsqu'elle dépend de la revendication 11, dans lequel ledit moyen de détection de croisement de limite comprend un moyen de détermination ou d'estimation des emplacements relatifs desdites parties de pistes différentes sur la piste.

**Patentansprüche**

1. Gerät zur Aufzeichnung und/oder Wiedergabe von Information auf und/oder von spiralförmigen oder konzentrischen Spuren (7) auf einem Aufzeichnungsmedium (6) unter Verwendung eines Aufzeichnungs-/Wiedergabe-Lichtstrahls (8), der auf die Spur (7) fokussiert ist;

   wobei das Gerät ein Spurfolge-Steuersystem aufweist, um den Aufzeichnungs-/Wiedergabe-Lichtstrahl (8) seitlich richtig positioniert auf der Spur (7) zu halten, und Mittel, um den Strahl (8) zum Springen zwischen den Spuren (7) wahlfrei zu betreiben;

   wobei das Spurfolge-Steuersystem eine Einrichtung (1, 2) zum Erzeugen eines Spurfolge-Steuersignals (TES), das zur Korrektur von Abweichungen des Strahls von seiner Sollposition auf der Spur dient, und eine Fehlerkorrekturschaltung (10, 11, 12, 13, 14) aufweist, welche Einrichtungen (10, 11, 12) zum Nachweis einer in dem Spurfolge-Steuersignal enthaltenen Offset-Spannung (Voff) aufweist und welche die Offset-Spannung (Voff) zur Fehlerkompensation in dem Spurfolge-Steuersignal (TES) benutzt;

   **dadurch gekennzeichnet,** daß das Spurfolge-Steuersystem eine Einrichtung (15) zur Erzeugung von Zeitsteuersignalen (RUN/RES, SAMPLE/HOLD) zum wahlfreien und systematischem Betreiben der Fehlerkorrekturschaltung (10, 11, 12, 13, 14) auf ein Korrektur-Steuersignal (JUMP) hin aufweist, welches anzeigt, daß der Strahl (8) zum Springen zwischen den Spuren (7) wahlfrei betrieben wird; und

   daß die Spannungsnachweiseinrichtungen (10, 11, 12) zum Nachweis der positiven (V1) und negativen (V2) Spannungsspitzen, welche in dem Spurfolge-Steuersignal (TES) in der Periode des Sprungs zwischen den Spuren auftreten, und zum Bereitstellen einer Ausgabespannung, welche die Hälfte der algebraischen Summe der Spitzenspannungen (1/2 {V1 + V2}) ist, als die Offset-Spannung (Voff) betreibbar ist.

2. Gerät nach Anspruch 1, wobei die Fehlerkorrekturschaltung weiterhin aufweist:

   Mittel (13) zum Festhalten der Offset-Spannung, und

   Mittel (14) zur Kompensation des Spurfolge-Steuersignals mit Hilfe der Offset-Spannung.

3. Gerät nach Anspruch 2, wobei die Nachweisenrichtungen (10, 11, 12) und die Festhaltemittel (13) zum Empfang der jeweiligen Zeitsteuersignale (RUN/RES, SAMPLE/HOLD) zur Verwendung in ihrem Betrieb ausgelegt sind.

4. Gerät nach Anspruch 2, wobei die Kompensationsmittel (14) in einer Subtraktionseinrichtung zur Subtraktion der Offset-Spannung (Voff) von dem Spurfolge-Steuersignal (TES) bestehen.

5. Gerät nach Anspruch 1, 2, 3 oder 4, wobei die Mittel zum Betreiben dazu ausgelegt sind, das Korrektur-Steuersignal (JUMP) der Erzeugungseinrichtung (15) für die Zeitsteuersignale bereitzustellen.

6. Gerät nach Anspruch 2, 3, 4 oder 5, wenn abhängig von Anspruch 2, 3 oder 4, wobei die Festhaltemittel (13) zum Abtasten und Festhalten der Offset-Spannung (Voff) und die Kompensationsmittel (14) zur Substraktion der festgehaltenen Offset-Spannung von dem Spurfolge-Steuersignal (TES) während der Aufzeichnung und/oder Wiedergabe von Information ausgelegt sind.

7. Gerät zum Aufzeichnen und/oder zur Wiedergabe von Information auf und/oder von spiralförmigen oder konzentrischen Spuren (7) auf einem Aufzeichnungsmedium (6) mit einem Aufzeichnungs-/Wiedergabe-Lichtstrahl (8), welcher auf die Spur (7) fokussiert ist, wobei die Information aufgezeichnet und/oder wiedergegeben wird von Spurbereichen mit verschiedenen physikalischen oder optischen Eigenschaften;

wobei das Gerät ein Spurfolge-Steuersystem enthält, das den Aufzeichnungs-/Wiedergabe-Strahl (8) seitlich richtig positioniert auf der Spur (7) hält;

wobei das Spurfolge-Steuersystem Mittel (21, 22) zum Erzeugen eines Spurfolge-Steuersignals (TES) aufweist, welches zur Korrektur von Abweichungen des Strahls von seiner Sollposition auf der Spur dient;

**dadurch gekennzeichnet,** daß das Gerät weiterhin Mittel zum Nachweis aufweist, daß der Strahl eine Grenze zwischen den verschiedenen Spurbereichen überschreitet; und

daß das Spurfolge-Steuersystem weiterhin eine Fehlerkorrekturschaltung (30, 31, 32, 33) mit Mitteln (30) zum Nachweis von spitzenartigen Spannungsausschlägen im Spurfolge-Steuersignal (TES), zur Fehlerkompensation in dem Spurfolge-Steuersignal (TES) und Mitteln (34) zur Erzeugung von Zeitsteuersignalen (ENABLE, RUN/RESET, SAMPLE/HOLD) zum wahlfreien und systematischen Betreiben der Fehlerkorrekturschaltung (30, 31, 32, 33) auf ein Korrektur-Steuersignal (TN) hin aufweist, welches anzeigt, daß der Strahl die Grenze überschreitet;

wobei die Spannungs-Nachweismittel (30) zum Nachweis des Spitzenwertes des zackenförmigen Spannungsausschlages in dem Spurfolge-Steuersignal (TES) in der Periode des Überschreitens der Grenze betreibbar ist, und wobei die Fehlerkorrekturschaltung dazu ausgelegt ist, den Spitzenwert zur Ausführung der Fehlerkompensation zu verwenden.

8. Gerät nach Anspruch 7, wobei die Fehlerkorrekturschaltung weiterhin aufweist:

Mittel (31) zum Festhalten des zackenförmigen Spannungs-Spitzenwertes, und

Mittel (32, 33) zur Kompensation des Spurfolge-Steuerungssignals unter Verwendung des zackenförmigen Spannungs-Spitzenwertes.

9. Gerät nach Anspruch 8, wobei die Spannungs-Nachweismittel (30) und die Festhaltemittel (31) dazu ausgelegt sind, die jeweiligen Zeitsteuersignale (ENABLE, RUN/RESET, SAMPLE/HOLD) für ihren Betrieb aufzunehmen.

10. Gerät nach Anspruch 8, wobei die Kompensationsmittel eine Arithmetik- (32) und eine Substraktionseinrichtung (33) aufweisen.

11. Gerät nach Anspruch 7, 8, 9 oder 10, wobei die Nachweismittel für die Grenzüberschreitung dazu ausgelegt sind, das Korrektur-Steuersignal (TN) an die Erzeugungsmittel (34) für die Steuersignale bereitzustellen.

12. Gerät nach Anspruch 7, 8, 9 oder 10, wobei die Nachweismittel (35) für Grenzüberschreitungen auch die Spannungsnachweismittel sind und die Nachweismittel (35) für Grenzüberschreitungen dazu ausgelegt sind, den Spitzenwert jeglicher zackenförmiger Spannungsverläufe in dem Spurfolge-Steuersignal (TES) nachzuweisen und das Korrektur-Steuersignal (SPIKE DETECTION) für die Erzeugungsmittel (36) für die Zeitsteuersignale bereitzustellen, wodurch die Erzeugungsmittel (36) für die Zeitsteuersignale zum Lesen der Information auf der Spur (7) und, wenn die Information auf einem der verschiedenen Spurbereiche ist, zum Erzeugen der Zeitsteuersignale (ENABLE, RUN/RESET, SAMPLE/HOLD) ausgelegt sind, welche anzeigen, wenn der Strahl (8) die Grenze überschreitet.

13. Gerät nach Anspruch 10, oder Anspruch 11 oder 12, wenn abhängig von Anspruch 10, wobei die Festhaltemittel (31) zum Abtasten und Festhalten der zackenförmigen Spannungsspitzenwerte ausgelegt sind, die Arithmetik-Einrichtung (32) zum Multiplizieren des festgehaltenen Spitzenwertes mit einem Abweichungskoeffizienten (K) und die Substraktionseinrichtung (33) zum Substrahieren des multiplizierten Spitzenwertes von dem Spurfolge-Steuersignal beim Aufzeichnen und/oder Wiedergeben von Information ausgelegt sind.

14. Gerät nach Anspruch 13, wenn abhängig von Anspruch 11, wobei die Nachweismittel für Grenzüberschreitung Mittel zur BeStimmung oder Abschätzung der relativen Positionen der verschiedenen Spurbereiche auf der Spur aufweisen.

FIG. 1

FIG. 2

FIG. 3

(a)　(b)　(c)

FIG. 4

(a)　(b)

FIG. 5

FIG. 6

FIG. 7

(a)

(b)

FIG. 8

JUMPING PERIOD
BETWEEN TRACKS

FIG. 9

13

FIG. 10

FIG. 11

EP 0 221 782 B1

OFF SET

TRACK

8

7

TES $0V$

PORTION OF A DIFFERENT NATURE

FIG. 12

FIG. 13

SPIKE VOLTAGE DETECTOR

SAMPLE HOLD CIRCUIT

(a)

INFORMATION AT PORTION OF A DIFFERENT NATURE

INFORMATION ON TRACK

TES

SPIKE DETECTION

ENABLE — DETECTING INSTRUCTION OF SPIKE VOLTAGE DETECTOR

RUN/$\overline{RESET}$ — RESET INSTRUCTION OF SPIKE DETECTOR

SAMPLE/$\overline{HOLD}$ — RENEWAL OF OFF SET CORRECTION VOLTAGE

PASSING THROUGH PORTION OF A DIFFERENT NATURE

PORTION OF A DIFFERENT NATURE

CORRECTION RENEWAL OF CORRECTION VALUE

(b)

FIG. 14